# EUROPÄISCHE PATENTSCHRIFT

(11) **EP 2 688 327 B1**
(45) Veröffentlichungstag und Bekanntmachung des Hinweises auf die Patenterteilung: **10.10.2018**
(21) Anmeldenummer: 13003399.6
(22) Anmeldetag: 04.07.2013
(51) Int. Cl.: H04W 8/26

(54) **Aktivieren von Teilnehmeridentitätsdaten**
Activation of subscriber identity data
Activation de données d'identité de participants

(30) Priorität: 19.07.2012 DE 102012014299
(43) Veröffentlichungstag der Anmeldung: 22.01.2014
(73) Patentinhaber: Giesecke+Devrient Mobile Security GmbH, 81677 München (DE)
(72) Erfinder: Hartel, Karl Eglof, 80689 München (DE); Gerstenberger, Volker, 85435 Erding (DE); Huber, Ulrich, 81475 München (DE); Luyken, Johannes, 81825 München (DE); Morawietz, Andreas, 81377 München (DE); Rudolph, Jens, 80639 München (DE)

(56) Entgegenhaltungen:
- EP-A1- 1 689 199
- WO-A1-2004/002176
- WO-A2-2009/133410
- US-A1- 2004 204 087

## Beschreibung

Die Erfindung betrifft ein Verfahren, ein System sowie ein Teilnehmeridentitätsmodul zum Aktivieren von Teilnehmeridentitätsdaten.

Teilnehmeridentitätsdaten dienen dazu, einen Teilnehmer in einem Kommunikationsnetzwerk, beispielsweise einem digitalen Mobilfunknetzwerk, eindeutig zu identifizieren und/oder zu authentisieren. Durch diese Teilnehmeridentitätsdaten ist es einem Betreiber eines Kommunikationsnetzwerks möglich, die Nutzung eines vom Netzbetreiber angebotenen Dienstes, beispielsweise eines Sprach- und/oder Datendienstes, jedem Teilnehmer in dem Kommunikationsnetzwerk eindeutig zuzuordnen. Weiterhin ist es dem Betreiber möglich, einen Netzzugang, also die Einbuchung in das Kommunikationsnetz, zu ermöglichen, sobald eine Authentisierung des Teilnehmers stattgefunden hat oder den Netzugang zu verweigern, sobald eine Authentisierung des Teilnehmers nicht möglich ist.

Diese Teilnehmeridentitätsdaten befinden sich in einem Teilnehmeridentitätsmodul, auch als Subscriber Identity Modul (SIM) bezeichnet. Üblicherweise wird jedes Endgerät mit einem derartigen Teilnehmeridentitätsmodul ausgestattet, um Dienste des Kommunikationsnetzwerkes nutzen zu können.

Meldet sich ein Teilnehmer an einem Kommunikationsnetz an, so wird mittels der Teilnehmeridentitätsdaten festgestellt, ob der Teilnehmer ordnungsgemäß im Kommunikationsnetz aktiviert ist und welche Dienste der Teilnehmer in dem Netzwerk nutzen darf. Ein nicht eindeutig identifizierbarer bzw. authentifizierbarer Teilnehmer ist zur Nutzung der Dienste nicht berechtigt und wird vom Netzwerk abgewiesen.

Heutzutage ist es üblich, dass ein Teilnehmer an einem Netzwerk eine Vielzahl von Endgeräten zur Nutzung von Diensten eines Kommunikationsnetzes besitzt. Dabei kann es beispielsweise der Wunsch eines Teilnehmers sein, zwischen mehreren Endgeräten, beispielsweise einem Firmenmobiltelefon, einem Kraftfahrzeugtelefon und Privattelefon, zu wechseln. Alternativ kann es der Wunsch des Teilnehmers sein, einem Endgerät einen Zugang zur Nutzung von Diensten des Netzwerks zu ermöglichen, beispielsweise zum Aktualisieren einer Firmware, zum Erhalten von Multimediadaten und der gleichen mehr.

Da die Nutzung eines jeden Endgeräts in einem Netzwerk zur Folge hat, dass das Endgerät ein Teilnehmeridentitätsmodul mit eindeutigen Teilnehmeridentitätsdaten aufzuweisen hat, muss der Teilnehmer in einer ersten Variante entsprechend der Vielzahl seiner Endgeräte auch eine entsprechende Vielzahl von Teilnehmeridentitätsmodulen verwenden, die vom Teilnehmer selbst und auch vom Netzwerkbetreiber verwaltet werden müssen. Dies führt je nach Betreiber zu höheren Kosten und zu Mehraufwand.

In einer zweiten Variante kann der Teilnehmer auch bei jedem Wechselwunsch ein Teilnehmeridentitätsmodul von einem ersten Endgerät entfernen und in ein zweites Endgerät einbringen. Diese Variante ist sehr unkomfortabel, beispielsweise müssen Endgeräte erst umständlich geöffnet werden, um das Teilnehmeridentitätsmodul einzubringen oder entfernen zu können. Eine flexible Nutzung der beiden Endgeräte ist damit ausgeschlossen. Das Problem wird umso akuter, wenn das SIM ein fest verdrahtetes Modul ist.

Aus dem Stand der Technik sind Systeme bekannt, die es erlauben, mehrere Teilnehmeridentitätsdaten in ein Teilnehmeridentitätsmodul einzubringen, um beispielsweise die Nutzung von Diensten eines Kommunikationsnetzes zu privaten Zwecken von der Nutzung der Dienste des gleichen Kommunikationsnetzes zu geschäftlichen Zwecken zu unterscheiden und entsprechend zu protokollieren. Derartige Systeme werden als Dual-IMSI Systeme bezeichnet. Diese Systeme erhöhen den Verwaltungsaufwand, da für ein Endgerät und das gleiche Kommunikationsnetz mehrere Teilnehmeridentitätsdaten generiert werden müssen, wodurch Mehrkosten entstehen.

In der EP 0 669 774 B1 wird vorgeschlagen, identische Teilnehmeridentitätsmodule, sogenannte SIM-Klone, zu verwenden. Jeder SIM-Klone weist identische Teilnehmeridentitätsdaten auf. Jeder SIM-Klone wird in ein Endgerät eingebracht. Eine gleichzeitige Einbuchung mehrerer Endgeräte wird durch ein netzbetreiberseitiges Überprüfungsverfahren unterbunden, wobei das Endgerät zur Nutzung von Diensten nur berechtigt ist, wenn nicht bereits ein weiteres Endgerät mit identischen Teilnehmeridentitätsdaten zum Nutzen von Diensten im Netzwerk eingebucht ist. Einerseits benötigt der Teilnehmer Netzverfügbarkeit, um das Endgerät für den Betrieb im Netzwerk zu berechtigen, andererseits blockiert ein fälschlicherweise eingebuchtes Endgerät die Einbuchung eines zweiten Endgeräts, wodurch der Teilnehmer das zweite Endgerät nicht für die Nutzung von Diensten des Netzwerks berechtigen kann.

Aus der US2004204087 gehen ein Verfahren und eine Vorrichtung hervor, um auf ein Netzwerk mit Hilfe von Subskriptionsinformationsdaten zuzugreifen. Dabei werden Subskriptionsinformationsdaten mit Hilfe eines lokalen Netzwerks übertragen. Somit kann ein Herausnehmen und erneutes Einsetzen der SIM vermieden werden.

Der Erfindung liegt daher die Aufgabe zugrunde, ein Verfahren bereitzustellen, bei dem ein Teilnehmer auf flexiblere, kostengünstigere und auf einfachere Weise mehrere Endgeräte für die Nutzung von Diensten in einem Kommunikationsnetzwerk verwenden kann.

Die Aufgabe der Erfindung wird durch die in den nebengeordneten unabhängigen Patentansprüchen beschriebenen Maßnahmen gelöst. Vorteilhafte Ausgestaltungen sind in den jeweils abhängigen Ansprüchen beschrieben.

Die Aufgabe wird insbesondere durch ein Verfahren zum Aktivieren von Teilnehmeridentitätsdaten in einem ersten Teilnehmeridentitätsmodul für ein erstes Endgerät zum eindeutigen Identifizieren eines Teilnehmers in einem Kommunikationsnetzwerk gelöst. Das Verfahren umfasst die folgenden Verfahrensschritte: Empfangen von Statusdaten bezüglich Teilnehmeridentitätsdaten eines zweiten Teilnehmeridentitätsmodul im ersten Teilnehmeridentitätsmodul über einen Kommunikationskanal zwischen dem ersten Teilnehmeridentitätsmodul und dem zweiten Teilnehmeridentitätsmodul; und Wechseln eines Status in den Statusdaten im ersten Teilnehmeridentitätsmodul von einem inaktiven Status in einen aktiven Status, wobei ab dem Zeitpunkt des Statuswechsels die Teilnehmeridentitätsdaten im ersten Teilnehmeridentitätsmodul aktiviert sind, wodurch das erste Endgerät zur Nutzung von Diensten über das Kommunikationsnetzwerk unter Verwendung der aktivierten Teilnehmeridentitätsdaten berechtigt wird.

Bei einem Endgerät im Sinn der Erfindung handelt es sich prinzipiell um ein Gerät oder eine Gerätekomponente, welches Mittel zur Kommunikation mit dem Kommunikationsnetzwerk aufweist, um Dienste des Kommunikationsnetzes nutzen zu können. Beispielsweise ist ein mobiles Endgerät wie ein Smart Phone, ein Tablet-PC, ein Notebook, ein PDA unter dem Begriff zu fassen. Unter dem Endgerät können beispielsweise auch Multimediaendgeräte wie digitale Bilderrahmen, Audiogeräte, Fernsehgeräte, E-Book-Reader verstanden werden, die ebenfalls Mittel zur Kommunikation mit dem Kommunikationsnetzwerk aufweisen. Beispielsweise umfasst der Begriff Endgeräte auch jegliche Art von Maschinen, Automaten, Fahrzeuge, Einrichtungen die Mittel, insbesondere Mobilfunkmodems, zur Kommunikation mit dem Kommunikationsnetzwerk aufweisen.

Bei einem Teilnehmeridentitätsmodul im Sinne der Erfindung handelt es sich um ein in Baugröße und Ressourcenumfang reduziertes Modul, welches einen Mikrocontroller und mindestens eine Datenschnittstelle zur Kommunikation mit einem Endgerät aufweist. Dieses Teilnehmeridentitätsmodul weist einen sicheren Speicherbereich auf, indem die Teilnehmeridentitätsdaten sicher eingebracht sind, um Manipulations- und/ oder Missbrauchsversuche bei der Identifizierung und/ oder Authentisierung am Netzwerk zu verhindern. Das Teilnehmeridentitätsmodul ist mittels des Endgeräts betriebsfähig.

Bei dem Teilnehmeridentitätsmodul handelt es sich beispielsweise um eine Chipkarte, auch Universal Integrated Circuit Card (UICC) oder SIM-Karte, in einem mobilen Funknetz mit auf einem Chip gespeicherten maschinenlesbaren Teilnehmeridentifikationsdaten des Teilnehmers. Derartige Teilnehmeridentifikationsmodule werden mittels Kartenleseeinheiten in einem Endgerät betrieben und sind insbesondere dafür vorgesehen, aus dem Endgerät zum Zweck eines Austauschs oder der Verwendung in einem zweiten Endgerät entnommen werden zu können.

Alternativ handelt es sich bei dem Teilnehmeridentitätsmodul um einen integralen Bestandteil innerhalb des Endgeräts, beispielsweise einen fest verdrahteten elektronischen Baustein. Derartige Teilnehmeridentitätsmodule werden auch als embedded UICC (eUICC) bezeichnet. In dieser Bauform sind diese Teilnehmeridentitätsmodule nicht für eine Entnahme aus dem Endgerät vorgesehen und können prinzipiell nicht einfach ausgetauscht werden. Derartige Teilnehmeridentitätsmodule können auch als embedded Secure Elements, also als eine sichere Hardwarekomponente im Endgerät ausgestaltet sein.

Alternativ handelt es sich bei dem Teilnehmeridentitätsmodul um ein Machine-to-Machine-, kurz M2M-, Modul. Diese Module dienen der Fernüberwachung, -kontrolle und -wartung von Endgeräten wie Maschinen, Anlagen und Systemen. Sie können alternativ auch für Zähleinheiten wie Stromzähler, Warmwasserzähler verwendet werden.

Alternativ ist das Teilnehmeridentitätsmodul als eine Softwarekomponente in einem vertrauenswürdigen Teil eines Betriebssystems, einer sogenannten Trusted Execution Environment (TEE) des Endgerätes ausgebildet. Das Teilnehmeridentitätsmodul ist dann beispielsweise innerhalb einer gesicherten Laufzeitumgebung in Form von darin ablaufenden Programmen, sogenannten Trustlets ausgebildet.

Teilnehmeridentitätsdaten im Sinn der Erfindung sind zum Einen Daten, die einen Teilnehmer eindeutig im Kommunikationsnetz identifizieren, beispielsweise eine International Mobile Subscriber Identity (IMSI) und/oder teilnehmerspezifische Daten. Zum Anderen können die Teilnehmeridentitätsdaten Daten sein, die einen Teilnehmer eindeutig am Kommunikationsnetz authentisieren, beispielsweise ein Authentisierungsalgorithmus, spezifische Algorithmusparameter, ein kryptografischer Authentisierungsschlüssel oder ein kyptografischer Over-The-Air (OTA) Schlüssel.

Ein Teilnehmer im Sinn der Erfindung ist beispielsweise eine Person, die mittels des Endgeräts auf Dienste des Kommunikationsnetzes zugreifen möchte. Als ein Teilnehmer ist auch ein Endgerät in einer M2M Umgebung zu verstehen.

Ein Kommunikationsnetzwerk im Sinn der Erfindung ist eine technische Einrichtung, auf der die Übertragung von Signalen unter Identifizierung und/oder Authentisierung des Kommunikationsteilnehmers stattfindet, wodurch Dienste angeboten werden. Insbesondere wird beispielsweise das "Global System for Mobile Communications", kurz GSM als Vertreter der zweiten Generation oder das "General Packet Radio Service", kurz GPRS bzw. "Universal Mobile Telecommunications System", kurz UMTS als Vertreter der dritten Generation oder das "Long Term Evolution", kurz LTE, als Vertreter der vierten Generation als Mobilfunknetz verstanden.

Ein Dienst im Sinn der Erfindung ist insbesondere ein Sprachdienst oder ein Datendienst, mit dem Informationen und/oder Daten über das Kommunikationsnetzwerk übertragen werden.

Als Kanal wird ein realer Übertragungsweg zwischen dem ersten und dem zweiten Endgerät verstanden, wobei das Kommunikationsmedium kontaktlos und/oder kontaktbehaftet ausgebildet ist. Der Kanal wird insbesondere nur in der Bitübertragungsschicht und/oder der Sicherungsschicht des OSI-Referenzmodells ausgebildet.

Der Kanal ist bevorzugt ein lokaler direkter kontaktloser Kommunikationskanal zwischen dem ersten und zweiten Endgerät, beispielsweise Nahfeldkommunikationsschnittstellen gemäß einer der ISO/IEC 14443, ISO/IEC 15693, ISO/IEC 18092; beispielsweise Bluetooth gemäß IEEE 802.15.1; ein direktes lokales Funknetz, kurz WLAN gemäß IEEE 802.11; eine Infrarot-Übertragung und/oder Wireless USB gemäß ISO/IEC 26907.

Der Kanal ist alternativ ein lokaler direkter drahtgebundener Kommunikationskanal zwischen dem ersten und zweiten Endgerät, beispielsweise mittels serieller Datenübertragung gemäß USB, Firewire.

Der Kanal ist alternativ ein gemäß des Bearer Independent Protocol, kurz BIP ausgebildeter lokaler Kommunikationskanal oder ein Kommunikationskanal über ein Mobilfunknetz. Der Kanal ist alternativ durch die Nutzung von SMS gebildet. Dazu ist physisch der Aufbau eines Kommunikationspfades zu einer entfernten Mobilfunkinstanz notwendig, das erfindungsgemäße Verfahren läuft dennoch logisch ausschließlich zwischen dem ersten Teilnehmeridentitätsmodul und dem zweiten Teilnehmeridentitätsmodul ab.

Der Status der Teilnehmeridentitätsdaten wird erfindungsgemäß von einem inaktiven Status in einen aktiven Status gewechselt, nachdem Statusdaten bezüglich Teilnehmeridentitätsdaten vom zweiten Endgerät empfangen worden sind. Somit wird in vorteilhafter Weise ein Teilnehmeridentitätsmodul erst ab dem Zeitpunkt aktivierter Teilnehmeridentitätsdaten im Netzwerk erfolgreich authentisiert und ist für die Nutzung der Dienste des Netzwerkes berechtigt. Das erste Endgerät erhält somit das Recht auf erfolgreiche Identifizierung/Authentisierung am Netzwerk durch Empfangen der Statusdaten vom zweiten Endgerät.

Dabei wird in einer Variante der Erfindung eine Authentisierung am Netz durch das Teilnehmeridentitätsmodul bzw. das Endgerät unterbunden, wenn ein inaktiver Status der Teilnehmeridentitätsdaten vorliegt. Dadurch dass die Prüfung des Status innerhalb des Teilnehmeridentitätsmoduls abläuft ist das Verfahren nicht manipulierbar.

In einer zweiten Variante fragt das Netz den Status der Teilnehmeridentitätsdaten des Teilnehmeridentitätsmoduls beim Authentisierungsversuch des jeweiligen Endgeräts mit ab und berechtigt bei aktivem Status und verweigert die Nutzung von Diensten bei inaktivem Status.

Insbesondere sind die Teilnehmeridentitätsdaten im ersten Teilnehmeridentitätsmodul und die Teilnehmeridentitätsdaten im zweiten Teilnehmeridentitätsmodul identisch. Die Teilnehmeridentitätsmodule sind insbesondere als SIM-Klone ausgebildet. Die Statusdaten der Teilnehmeridentitätsdaten unterscheiden sich zumindest insofern, dass nur eines aller an dem erfindungsgemäßen Verfahren beteiligten Endgeräte aktivierte Teilnehmeridentitätsdaten aufweist. Dadurch werden die Teilnehmeridentitätsmodule auf einfache Weise erzeugt, bzw. können die Daten für das jeweilige Modul einfach generiert werden, wobei die Nutzung von Diensten nur von einem Endgerät aus möglich ist. Eine Beteiligung des Netzbetreibers, insbesondere die Überwachung eines bereits eingebuchten SIM-Klones kann dabei unterbleiben. Eine gleichzeitige Nutzung von Diensten durch zwei Endgeräte mit identischen Teilnehmeridentitätsdaten ist damit sicher verhindert. Einem Teilnehmer wird es dadurch ermöglicht, mehrere Endgeräte nach seinem Belieben zu betreiben, wobei das Recht zur Nutzung eines Endgeräts direkt von einem anderen Endgerät übertragen wird.

Insbesondere ist vor dem Empfangen der Statusdaten des zweiten Teilnehmeridentitätsmoduls im ersten Teilnehmeridentitätsmodul das zweite Endgerät zur Nutzung von Diensten über das Kommunikationsnetzwerk unter Verwendung von Teilnehmeridentitätsdaten im zweiten Teilnehmeridentitätsmodul berechtigt. Somit wird quasi das Recht zur Nutzung von Diensten des Netzwerkes vom zweiten Endgerät an das erste Endgerät übertragen. Die Endgeräte bauen dabei einen Kanal auf und übergeben sich gegenseitig das Recht zur Nutzung der Dienste.

Insbesondere wird vor dem Empfangen der Statusdaten des zweiten Teilnehmeridentitätsmoduls ein Status der Statusdaten des zweiten Teilnehmeridentitätsmoduls von einem aktiven Status in einen inaktiven Status gewechselt, wobei ab dem Zeitpunkt des Statuswechsels im zweiten Teilnehmeridentitätsmodul die Teilnehmeridentitätsdaten deaktiviert werden, wodurch das zweite Endgerät zur Nutzung von Diensten über das Kommunikationsnetzwerk nicht weiter berechtigt ist. Somit kann ein Teilnehmer wunschgemäß das erste Endgerät für die Nutzung der Dienste aktivieren, wobei zuvor ein zweites Endgerät für die Nutzung deaktiviert wird.

In einer vorteilhaften Ausgestaltung der Erfindung wird der Wechsel des Status in den Statusdaten des ersten Teilnehmeridentitätsmoduls als Bestätigung an das zweite Teilnehmeridentitätsmodul gesendet. Dadurch wird in dem Verfahren ein Rückkanal gebildet, wodurch das zweite Endgerät über das erfolgreiche Aktivieren des ersten Teilnehmeridentitätsmoduls informiert wird. Die Bestätigung kann insbesondere an eine vordefinierte Zeitspanne gekoppelt sein, sodass beim Ausbleiben der Bestätigung das Netzwerk informiert wird.

In einer Ausgestaltung der Erfindung werden vor dem Senden der Statusdaten des zweiten Teilnehmeridentitätsmoduls durch das zweite Teilnehmeridentitätsmodul Kennungsdaten des ersten Teilnehmeridentitätsmoduls beinhaltend eine Kennung des ersten Teilnehmeridentitätsmoduls in die Statusdaten eingebracht. Dabei werden die Kennungsdaten in ein Datenfeld von Kennungsdaten des zweiten Teilnehmeridentitätsmoduls eingebracht. Somit ist protokolliert, an welches Teilnehmeridentitätsmodul im System die Statusdaten übermittelt wurden, sodass bei einer fehlerhaften Einbuchung des ersten Teilnehmeridentitätsmodul und/oder einer ausbleibenden Bestätigung des Empfangs der Statusdaten im zweiten Teilnehmeridentitätsmodul die Statusdaten erneut an das erste Teilnehmeridentitätsmodul gesendet werden können. Somit ist bei einem fehlerhaften Abbruch des Verfahrens reproduzierbar, an welches Teilnehmeridentitätsmodul die Statusdaten gesendet worden sind.

Eine Kennung ist dabei erfindungsgemäß eine in dem System eindeutige Identifizierung des Teilnehmeridentitätsmoduls. Die Kennung ist von den Teilnehmeridentitätsdaten verschieden. Die Kennung kann dabei eine für das gesamte Kommunikationsnetzwerk eindeutige Nummer des Teilnehmeridentitätsmodul sein, beispielsweise eine Integrated Chip Card Identification, kurz ICCID. Alternativ kann die Nummer eine für alle im erfindungsgemäßen Verfahren bzw. System beteiligten Teilnehmeridentitätsmodule eindeutige Nummer sein. Jedes für das Verfahren hinzugefügte weitere Endgerät erhält ein Inkrement der letzten vergebenen Nummer. Dadurch wird jedes Modul eindeutig im Verfahren identifizierbar.

In einer vorteilhaften Ausgestaltung werden vor dem Empfangen der Statusdaten des zweiten Teilnehmeridentitätsmoduls im ersten Teilnehmeridentitätsmodul Kennungsdaten vom zweiten Teilnehmeridentitätsmodul an das erste Teilnehmeridentitätsmodul beinhaltend eine Kennung des zweiten Teilnehmeridentitätsmoduls und eine Kennung des ersten Teilnehmeridentitätsmoduls übertragen. Das erste Teilnehmeridentitätsmodul bestätigt die empfangenen Kennungsdaten. Danach wird der Status in den Statusdaten des zweiten Teilnehmeridentitätsmoduls von einem aktiven Status in einen inaktiven Status gewechselt. Ab dem Zeitpunkt des Statuswechsels im zweiten Teilnehmeridentitätsmodul werden die Teilnehmeridentitätsdaten deaktiviert, wodurch das zweite Endgerät zur Nutzung von Diensten über das Kommunikationsnetzwerk unberechtigt wird.

Diese Ausgestaltung hat den Vorteil, dass das zweite Modul erst auf eine korrekte Bestätigung der Kennungsdaten hin den Status wechselt. Das Teilnehmeridentitätsmodul weist dazu Datenfelder für Kennungsdaten von zumindest zwei Teilnehmeridentitätsmodulen auf. Manipulationsversuche werden auf diese Weise wirksam unterbunden. Zusätzlich erfolgt eine wirksame Protokollierung des Statuswechsels sowohl im ersten Modul als auch im zweiten Modul. Sollte unerwarteter Weise der Kommunikationskanal gestört oder unterbrochen werden, kann jederzeit nachvollzogen werden, welche Module untereinander Kennungsdaten ausgetauscht haben und insbesondere, welches Modul bis zum Zusammenbruch des Kanals aktivierte Teilnehmeridentitätsdaten aufwies.

In einer bevorzugten Ausgestaltung beinhalten die Statusdaten einen Zählstand und der Zählstand wird inkrementiert oder dekrementiert, sobald die Statusdaten im ersten Teilnehmeridentitätsmodul empfangen werden. Dazu weisen die Statusdaten ein Datenfeld für einen Statuswechselzähler auf. Einerseits können somit die Anzahlen der Aktivierungen protokolliert werden. Der Zählstand kann auf einen vordefinierten Maximalwert begrenzt werden, wobei bei Erreichen des Maximalwertes spezielle Ereignisse ausgelöst werden können, beispielsweise die Benachrichtigung des Netzbetreibers und/oder des Teilnehmers.

Insbesondere ist der Kommunikationskanal kryptografisch gesichert. Dazu werden insbesondere symmetrische Schlüssel verwendet. Zusätzlich erfolgt eine Absicherung des Kanals mit Hilfe eines Message Authentification Codes, kurz MAC, wodurch die Integrität der Statusdaten bzw. der Kennungsdaten in jedem Modul nachprüfbar wird. Eine Manipulation des Verfahrens ist damit ausgeschlossen.

Im Erfindungsgrundgedanken ist weiterhin ein Teilnehmeridentitätsmodul für ein Endgerät, aufweisend eindeutige Teilnehmeridentitätsdaten zur Identifizierung eines Teilnehmers in einem Kommunikationsnetzwerk, wobei das Teilnehmeridentitätsmodul Statusdaten aufweist. Die Statusdaten sind zwischen einem inaktiven und einem aktiven Status wechselbar. Die Teilnehmeridentitätsdaten sind erst ab dem Zeitpunkt eines Wechsels der Statusdaten von einem inaktiven Status in einen aktiven Status aktiviert, wodurch das Endgerät zur Nutzung von Diensten über das Kommunikationsnetzwerk unter Verwendung der Teilnehmeridentitätsdaten berechtigt ist.

In einer vorteilhaften Ausgestaltung weist das Teilnehmeridentitätsmodul Teilnehmeridentitätsdaten zur Identifizierung des Teilnehmers an zumindest zwei unterschiedlichen Kommunikationsnetzen auf, wobei für jedes Kommunikationsnetz separate Statusdaten vorgesehen sind. Somit können in Abhängigkeit des ausgewählten Kommunikationsnetzes Teilnehmeridentitätsdaten aktiviert werden.

Wird zur Aktivierung der Teilnehmeridentitätsdaten ein SMS oder BIP Kanal verwendet, so ist eines der Profile eine Aktivierungssubskription, in die das Teilnehmeridentitätsmodul umgeschaltet wird, sobald die Teilnehmeridentitätsdaten des jeweiligen Teilnehmeridentitätsmoduls von einem aktiven Status in einen inaktiven Status wechseln. Somit ist das Teilnehmeridentitätsmodul auch in einem inaktiven Status der Teilnehmeridentitätsdaten für eine entfernte Mobilfunkinstanz zum Zweck der Aktivierung erreichbar und kann beispielsweise OTA von einem inaktiven Status in einen aktiven Status wechseln.

Im Erfindungsgrundgedanken ist ebenfalls ein System mit mindestens zwei Teilnehmeridentitätsmodulen enthalten, wobei jedes der im System befindlichen Teilnehmeridentitätsmodule identische Teilnehmeridentitätsdaten aufweist, und jedes der im System befindlichen Teilnehmeridentitätsmodule eine eindeutige Kennung aufweist, wodurch das jeweilige Teilnehmeridentitätsmodul im System eindeutig identifizierbar ist.

Ein erfolgter Statuswechsel zum Aktivieren und/oder Deaktivieren von Teilnehmeridentitätsdaten von dem betroffenen Teilnehmeridentitätsmodul wird an eine entfernte Instanz im Kommunikationsnetzwerk berichtet. Die entfernte Instanz ist beispielsweise eine Servereinrichtung des Netzbetreibers, die die Statuswechsel protokolliert. Somit ist bei Abbruch des Kommunikationskanals die Herstellung des Zustands vor dem Empfang der Statusdaten möglich.

Nachfolgend werden anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.

Es zeigen:
Figur 1 Ein System mit SIM Klonen gemäß dem Stand der Technik
Figur 2 Ein erfindungsgemäßes System zum Aktivieren von Teilnehmeridentitätsdaten
Figur 3 Ein Blockschaltbild eines erfindungsgemäßen Teilnehmeridentitätsmoduls
Figur 4 Eine Schichtendarstellung der Programm- und Datenhierarchie in einem erfindungsgemäßen Teilnehmeridentitätsmodul
Figur 5 Eine beispielhafte Darstellung von erfindungsgemäßen Teilnehmeridentitätsdaten
Figur 6 Ein Ausführungsbeispiel von erfindungsgemäßen Statusdaten
Figur 7a, b Weiterbildungen der in Figur 6 gezeigten Datenfelder im Teilnehmeridentitätsmodul
Figur 8a, b, c Beispielhafte Ablaufdiagramme für das erfindungsgemäße Verfahren

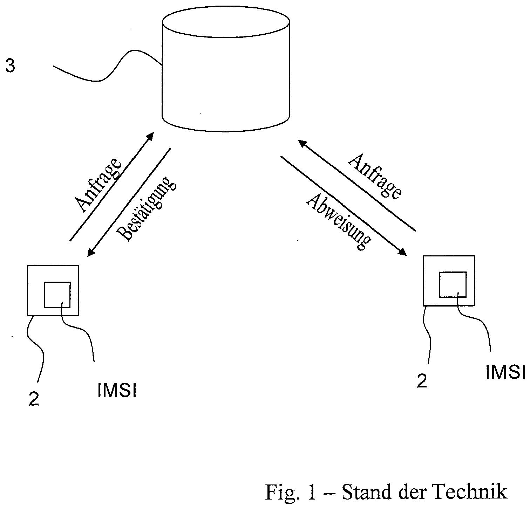

Figur 1 zeigt ein System zur Aktivierung eines Teilnehmeridentitätsmoduls 2 in einem Mobilfunknetz 3 als Kommunikationsnetzwerk gemäß dem Stand der Technik. Jedes Teilnehmeridentitätsmodul 2 wird dabei mittels eines nicht dargestellten Endgeräts 1 betrieben. Die Teilnehmeridentitätsmodule 2 sind identisch, also SIM-Klone 2. Alle in die SIM-Klone 2 eingebrachten IMSI sind vollkommen identisch. Die Anzahl der SIM-Klone 2 ist dabei nicht beschränkt.

Möchte sich einer der SIM-Klone 2 am Mobilfunknetz 3 anmelden, sodass beispielsweise ein nicht dargestelltes Endgerät 1 Dienste des Mobilfunknetzes 3 nutzen kann, so stellt der SIM-Klone 2 eine Anfrage an das Netz 3. Das Netz 3 überprüft, ob eine SIM 2 mit identischer IMSI bereits eingebucht ist. Stellt das Netz 3 fest, dass noch keine derartige IMSI im Netz 3 eingebucht ist, berechtigt es das anfragende SIM 2 und sendet eine entsprechende Bestätigung. Stellt das Netz 3 allerdings fest, dass bereits eine derartige IMSI im Netz 3 eingebucht ist, berechtigt es das anfragende SIM 2 nicht und sendet eine entsprechende Ablehnung an das SIM 2.

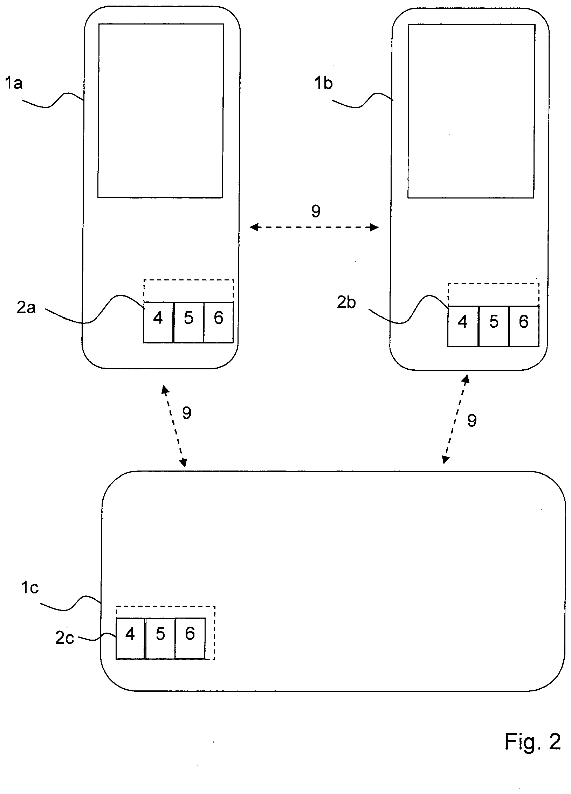

In Figur 2 ist ein Ausführungsbeispiel eines erfindungsgemäßen Systems dargestellt. Das System umfasst ein erstes Endgerät 1a, hier Mobiltelefon 1a. Das System umfasst weiterhin ein zweites Endgerät 1b, hier Mobiltelefon 1b. Das System umfasst weiterhin ein drittes Endgerät 1c, hier ein digitaler Bilderrahmen 1c.

Jedes der drei Endgeräte 1a, 1b, 1c beinhaltet ein Teilnehmeridentitätsmodul 2a, 2b, 2c, im Folgenden als SIM bezeichnet. Die SIM 2a, 2b, 2c weisen identische Teilnehmeridentitätsdaten 4 auf. Weiterhin weisen die Die SIM 2a, 2b, 2c Statusdaten 5 auf. Weiterhin weisen die SIM 2a, 2b, 2c Kennungsdaten 6 auf. Die Statusdaten 5 unterscheiden sich innerhalb des Systems nach Figur zumindest dadurch, dass lediglich eines der Endgeräte 1a, 1b, 1c Teilnehmeridentitätsdaten 4 in einem aktiven Status aufweist, wohingegen alle übrigen Endgeräte Teilnehmeridentitätsdaten 4 in einem inaktiven Status aufweisen. Der jeweilige Status der Teilnehmeridentitätsdaten 4 wird anhand der Statusdaten 5 angezeigt. In Figur 2 weist das zweite SIM 2b aktivierte Teilnehmeridentitätsdaten auf, was durch einen aktiven Status in den Statusdaten 5 dokumentiert ist.

Möchte nun eine Person das zweite Endgerät 1b durch das erste Endgerät 1a ersetzen, musste er bislang entweder die SIM aus dem zweiten Endgerät 1b entfernen und in das erste Endgerät 1a einbringen, wobei zuvor beide Endgeräte 1a und 1b ausgeschaltet werden müssen. Falls bereits ein SIM-Klone gemäß dem Stand der Technik in jedem Endgerät 1a, 1b enthalten ist, muss zumindest das zweite Endgerät 1b aus dem Netz ausgebucht werden, sodass das erste Endgerät sich einbuchen kann. Dabei ist der Benutzer auf Netzantworten und Netzwartezeiten angewiesen, die mitunter mehrere Minuten bis Stunden dauern kann. Somit sind alle bekannten Varianten sehr zeitaufwendig, unflexibel und in einem hohen Maß benutzerunfreundlich.

Erfindungsgemäß wird nun ein Kanal, beispielsweise eine NFC- Verbindung, zwischen dem ersten Endgerät 1a und dem zweiten Endgerät 1b aufgebaut, was durch den gestrichelten Pfeil 9 dargestellt ist. Der Kanal ist kryptografisch gesichert, insbesondere durch einen gemeinsamen symmetrischen Schlüssel. Alternativ handeln die beiden Endgeräte einen für den Zeitpunkt des Verfahrens gültigen Sitzungsschlüssel aus. Nun wird das erfindungsgemäße Verfahren angewendet, indem die Statusdaten 5 der Teilnehmeridentitätsdaten 4 des zweiten Teilnehmeridentitätsmoduls 2b in einen inaktiven Status gewechselt werden. Ab diesem Zeitpunkt ist das zweite Endgerät 1b nicht mehr berechtigt, Dienste des Mobilfunknetzes 3 zu nutzen. Anschließend empfängt das erste Teilnehmeridentitätsmodul 2a die Statusdaten 5 des zweiten Teilnehmeridentitätsmoduls 2b. Anschließend wechselt das erste Teilnehmeridentitätsmodul 1a die Statusdaten 5 der Teilnehmeridentitätsdaten 4 von einem inaktiven Status in einen aktiven Status. Ab diesem Zeitpunkt ist das erste Endgerät 1a berechtigt, Dienste des Mobilfunknetzes 3 zu nutzen.

In einer nicht dargestellten Alternative der Erfindung wird der Kanal 9 über eine entfernte Mobilfunkinstanz aufgebaut, sodass die Kommunikation mittels SMS oder BIP erfolgen kann. Für eine derartige Ausgestaltung sind die Teilnehmeridentitätsmodule 2 mit einer Aktivierungssubskription - auch provisioning subscription genannt - ausgestattet, in die das Teilnehmeridentitätsmodul 2 umgeschaltet wird, wenn die Teilnehmeridentitätsdaten 4 des jeweiligen Teilnehmeridentitätsmoduls 2 in einem inaktiven Status sind.

Das Verfahren kann beispielsweise mittels Graphical User Interface, kurz GUI, gestartet werden, sodass der Benutzer mittels weniger Schritte das Endgerät 1 wechseln kann. Das Recht zur Nutzung von Diensten des Netzes 3 kann ebenso auch vom ersten Endgerät 1a zum dritten Endgerät 1c oder vom dritten Endgerät 1c zum zweiten Endgerät 1b übertragen werden.

Das Verfahren ist vielseitig einsetzbar und flexibel auf eine Vielzahl von Endgeräten und Alltagsszenarien anwendbar, wobei die folgende Aufzählung nicht allumfassend ist. Ein Teilnehmer kann nun auf einfache Weise zwischen zwei Endgeräten 1 wechseln, wobei er beispielsweise während der Arbeitszeit ein Firmentelefon als erstes Endgerät 1a verwendet, in dem alle Firmenkontakte und Termine abgelegt sind. In seiner Freizeit greift er auf ein Smart Phone als zweites Endgerät 1b zurück, wobei er das Recht zur Nutzung mittels des erfindungsgemäßen Verfahrens überträgt. Bei einer abendlichen Verabredung ist ihm das Smart Phone als zweites Endgerät vielleicht zu unhandlich oder die Angst des Verlustes durch Diebstahl zu groß, sodass er auf ein alternatives Endgerät wechselt.

Bei der Verwendung eines e-Book Readers als Endgerät möchte er ggf. ein weiters Buch kaufen, eine Firmware des e-Book Readers aktualisieren oder eine Bezahltransaktion durchführen, sodass er die Teilnehmeridentität 4 im e-Book Reader mittels des erfindungsgemäßen Verfahrens aktiviert.

Für eine Fahrt mit dem Kraftfahrzeug, verwendet der Teilnehmer das fest im Fahrzeug eingebaute Teilnehmeridentitätsmodul 2 und überträgt das Recht der Nutzung von Diensten an das im Kfz verbaute Endgerät über den sicheren Kanal. Somit kann das Kfz neben Sprachdiensten auch auf Navigationsdienste des Mobilfunknetzes zurückgreifen oder Verkehrsmittelungen als Datendienste empfangen.

Zum Musikhören kann der Teilnehmer beispielsweise ein digitales Audiogerät zum Empfangen von digitaler Musik aus einem Online-Musikstore nutzen. Zum Betrachten von Bildern können Teilnehmeridentitätsdaten 4 in einem digitalen Bilderrahmen aktiviert werden, um beispielsweise aus einem Netzdatenspeicher Bilder auf den Bilderrahmen zu übertragen. Somit kann das Endgerät 1 auch ein Multimediaendgerät 1 sein. Da für jeden Teilnehmer nur ein Datensatz an Teilnehmeridentitätsdaten 4 generiert werden muss, der in jedes Endgerät nur einmal einzubringen ist, ist eine sehr einfache Verwaltung erhalten. Die Berechtigung der Nutzung wird einfach über einen Kanal zwischen den Endgeräten weitergegeben.

In einer alternativen Ausgestaltung sind die Teilnehmeridentitätsmodule 2 M2M Module und beispielsweise in Endgeräten 1 wie Maschinen, Anlagen, Geräten oder Messeinheiten wie Stromzähler, Heizungszähler, Temperaturerfassungseinheiten etc. eingebracht, um Informationen die Maschine bzw. die Umwelt betreffend über ein Netzwerk 3 zu versenden. Zur Übertragung der Informationen muss nun nicht jedes Endgerät mit aktivierten Teilnehmeridentitätsdaten 4 ausgestattet sein. Insbesondere kann das Versenden der Informationen durch ein erfindungsgemäßes Aktivieren der Teilnehmeridentitätsdaten 4 erfolgen.

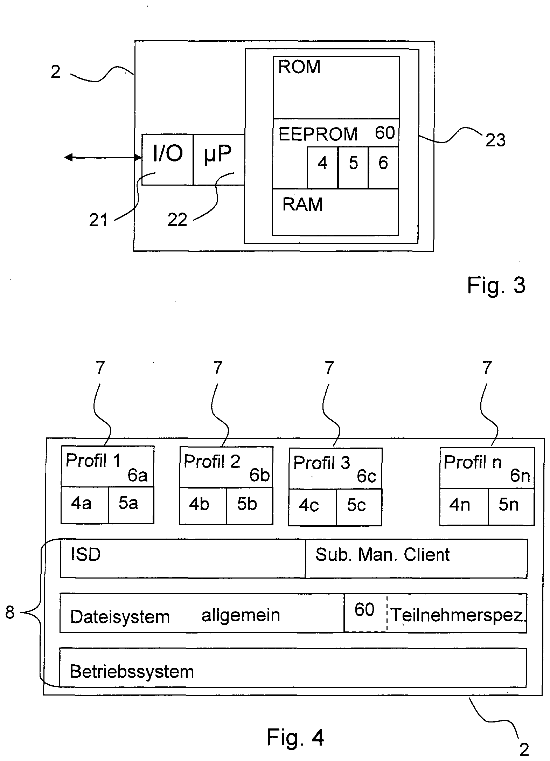

In Figur 3 ist ein Blockschaltbild eines Teilnehmeridentitätsmoduls 2 dargestellt. Dabei weist das Teilnehmeridentitätsmodul 2 eine Datenschnittstelle 21 auf. Eine zentrale Recheneinheit 22 verbindet die Datenschnittstelle 21 mit einem Speicher 23, der flüchtig (RAM) oder nicht flüchtig (ROM, EEPROM, FLASH) ausgebildet sein kann. Sowohl die Teilnehmeridentitätsdaten 4 als auch die Kennung 60 sind in einem veränderbaren nichtflüchtigen Speicherbereich, beispielsweise EEPROM oder Flash, abgelegt. Dadurch kann die Kennung 60 für das jeweilige System angepasst werden und für den Fall einer fortlaufenden Nummerierung der Endgeräte 1, entsprechend geändert oder adaptiert werden. Im veränderbaren nichtflüchtigen Speicherbereich EEPROM sind weiterhin die Statusdaten 5 abgelegt, da diese in Abhängigkeit des Status der Teilnehmeridentitätsdaten 4 geändert werden müssen. Im veränderbaren nichtflüchtigen Speicherbereich EEPROM sind weiterhin die Kennungsdaten 6 abgelegt. Es ist dabei zu unterscheiden zwischen der Kennung 60 des Teilnehmeridentitätsmodul 2 und den Kennungsdaten 6 der Teilnehmeridentitätsmodule 2, mit denen das Teilnehmeridentitätsmodul den sicheren Kanal aufbaut. Die Kennung identifiziert somit das eigene Teilnehmeridentitätsmodul während die Kennungsdaten die anderen Teilnehmeridentitätsmodule 2 im System identifizieren.

In Figur 4 ist eine beispielhafte Schichtendarstellung der Programm- und Datenhierarchie in einem erfindungsgemäßen Teilnehmeridentitätsmodul dargestellt. Dabei ist im Speicherbereich 23 des Teilnehmeridentitätsmoduls ein Betriebssystem mit einem damit verknüpften allgemeinen Dateisystem abgelegt, wobei das Dateisystem über das Betriebssystem administrierbar ist. Ein Speicherbereich mit teilnehmerspezifischen Daten ist ebenfalls über das Betriebssystem administrierbar.

Gemäß Figur 4 handelt es sich um ein Teilnehmeridentitätsmodul 2, welches mit einem oder mit einer Mehrzahl von Teilnehmeridentitätsprofilen 7 ausgestattet ist. Jedes Teilnehmeridentitätsprofil 7 gemäß Figur 4 beinhaltet Teilnehmeridentitätsdaten 4a, 4b, 4c, 4n, die einen Teilnehmer an jeweils unterschiedlichen Kommunikationsnetzen 3 eindeutig identifizieren und/oder authentisieren. Die Profile a bis n sind dabei einzeln hinzufügbar, aktivierbar, nutzbar, deaktivierbar und auch löschbar. Eine Administration der Profile 7 und der dafür notwendigen Daten, Authentisierungen und Verschlüsselung wird mittels eines Subskriptions-Management-Klienten durchgeführt.

Eine entsprechende Sicherheitsebene ISD sichert diese Verwaltung der Profile 7 ab. Die jeweiligen Daten werden insbesondere über eine Luftschnittstelle, insbesondere Over-The-Air (OTA) in das jeweilige Teilnehmeridentitätsmodul 2 geladen.

Wird als Kanal 9 SMS oder BIP verwendet, so ist eines der Profile 7 eine Aktivierungssubskription, in die das Teilnehmeridentitätsmodul 2 umgeschaltet wird, wenn die Teilnehmeridentitätsdaten 4 des jeweiligen Teilnehmeridentitätsmoduls 2 von einem aktiven Status in einen inaktiven Status wechseln.

Jedes Profil 7 weist dabei individuelle Teilnehmeridentitätsdaten 4a, 4b, 4c, 4n, eigene Statusdaten 5a, 5b, 5c, 5n und gegebenenfalls auch Kennungsdaten 6a, 6b, 6c, 6n auf, die Teilnehmeridentitätsmodule 2 des Systems eindeutig identifizieren. Da die Kennung 60 aber lediglich das Teilnehmeridentitätsmodul 2 eindeutig im erfindungsgemäßen System identifizieren sollen, kann diese Kennung 60 in jedem Profil 7 identisch sein und/ oder außerhalb des Speicherbereichs der Profile 7, beispielsweise in den teilnehmerspezifischen Datenbereich des Teilnehmeridentitätsmoduls 2 abgelegt sein.

Mit derartigen Teilnehmeridentitätsmodulen 4 ist es nicht mehr zwingend notwendig, dass ein Betreiber eines Netzwerkes 3 für die Identifizierung und Authentisierung eines Teilnehmers an seinem Netzwerk auf Basis eines geschlossenen Vertrags ein neues Teilnehmeridentitätsmodul 4 erzeugt und an den Teilnehmer in Form einer SIM Karte ausgibt. Stattdessen wird ein Profil 7 durch den Netzbetreiber auf Basis des geschlossenen Vertrages erstellt. Das Profil 7 wird dann in das bereits im Endgerät 1 eingebrachte Teilnehmeridentitätsmodul 4 eingebracht und kann parallel zu anderen Profilen 7 existieren. Dadurch ergibt sich, dass das Teilnehmeridentitätsmodul 4 nicht mehr mechanisch lösbar in einem Endgerät 1 eingebracht werden muss, stattdessen können fest verdrahtete Teilnehmeridentitätsmodule 4, kurz eUICCs, im Endgerät 1 eingebracht sein. Dies spart Platz im Endgerät, wodurch andere Funktionalitäten im Endgerät 1 realisiert werden können, ohne die Bauform des Endgeräts 1 vergrößern zu müssen. Das erfindungsgemäße Verfahren ist insbesondere auf eUICC anzuwenden, da hier ein Benutzer nicht das Teilnehmeridentitätsmodul 4 vom ersten Endgerät 1a ins zweite Endgerät 1b verlagern kann.

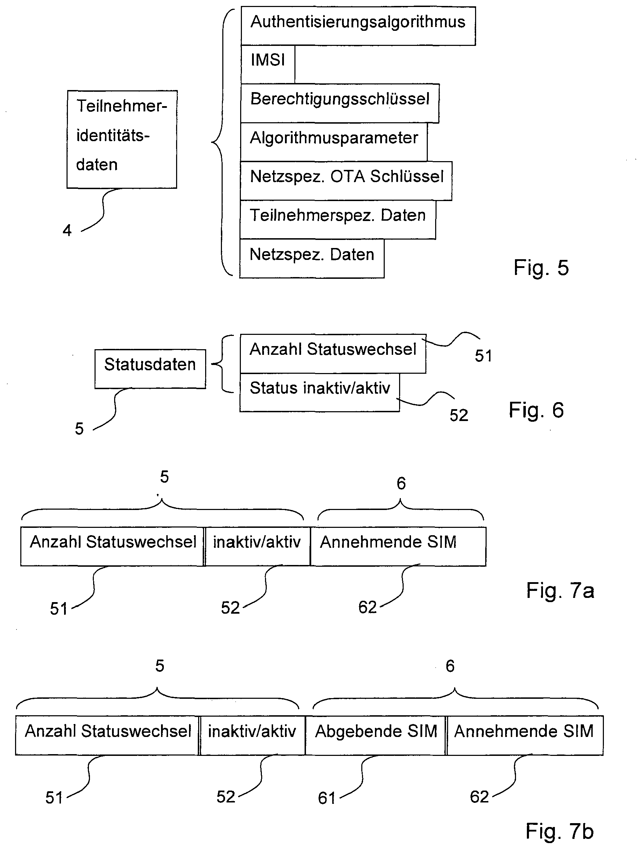

Gemäß Figur 5 sind beispielhafte Teilnehmeridentitätsdaten 4 aufgelistet. Diese Teilnehmeridentitätsdaten 4 gemäß Figur 5 umfassen insbesondere eine Angabe über den beim Betreiber des Netzwerkes 3 verwendet Authentisierungsalgorithmus, die International Mobile Subscriber Identity (IMSI), die zur Authentisierung verwendeten kryptografischen Berechtigungsschlüssel, die Parametereinstellungen des verwendeten Algorithmus, ggf. netzbetreiberspezifische OTA-Schlüssel, um eine sichere OTA-Kommunikation zu ermöglichen, teilnehmerspezifische Daten, wie Name, Vorname, ID-Nummer, Geburtsdatum, Geburtsort etc; und ggf. zusätzliche netzbetreiberspezifische Daten, beispielsweise welche Dienste im jeweiligen Netz 3 für den Teilnehmer freigeschaltet sind. Diese Auflistung ist keinesfalls allumfassend und kann in alternativen Beispielen auch weniger, mehr oder andere Daten umfassen.

In Figur 6 sind beispielhafte Statusdaten 5 dargestellt. Dabei ist ein Datenfeld 51 in den Statusdaten 5 vorgesehen, um die Anzahl von Statuswechsel des jeweiligen Teilnehmeridentitätsmoduls 4, bzw. des jeweiligen Profils 7 innerhalb eines Teilnehmeridentitätsmoduls 4 gemäß Figur 4 zu protokollieren. Dabei kann bei Erreichen eines vordefinierten Wertes an Statuswechseln ein Ereignis innerhalb des Teilnehmeridentitätsmoduls 2 ausgelöst werden.

Weiterhin ist in den Statusdaten ein Datenfeld 52 vorgesehen, welches darstellt, ob sich die Teilnehmeridentitätsdaten 4 in einem aktiven oder in einem inaktiven Status befinden, sozusagen, ob das Teilnehmeridentitätsmodul 4 zur Nutzung von Diensten des Netzes 3 berechtigt ist oder nicht.

In Figur 7a und b sind Weiterbildungen der in Figur 6 dargestellten Statusdaten 5 mit entsprechenden Kennungsdaten 6 dargestellt. Gemäß Figur 7a ist ein zusätzliches Datenfeld 62 vorgesehen. Das Datenfeld 62 ist dabei insbesondere für die Kennungsdaten 6 des Teilnehmeridentitätsmoduls 2 vorgesehen, an welches die Statusdaten 5 gesendet worden sind bzw. beabsichtigt wird, die Kennungsdaten 6 zu senden, also das annehmende SIM 2.

In Figur 7b ist eine alternative Ausgestaltung der in Figur 7a gezeigten Weiterbildung der Figur 6 dargestellt. Im Unterschied zu Figur 7a sind zwei zusätzliche Datenfelder 61, 62 für Kennungsdaten 6 von Teilnehmeridentitätsmodulen 2 vorgesehen. Das Datenfeld 61 ist dabei insbesondere für die Kennungsdaten 6 des Teilnehmeridentitätsmoduls 2 vorgesehen, von welchem die Statusdaten empfangen worden sind, also das abgebende SIM 2. Das Datenfeld 62 ist dabei insbesondere für die Kennungsdaten 6 des Teilnehmeridentitätsmoduls 2 vorgesehen, an welches die Statusdaten 5 gesendet worden sind bzw. beabsichtigt wird, die Kennungsdaten 6 zu senden, also das annehmende SIM 2.

Es wird hier ausdrücklich darauf hingewiesen, dass Kennungsdaten 6 Teil der Statusdaten 5 sein können und somit nur ein Datensatz zwischen den Teilnehmeridentitätsmodulen 2 ausgetauscht wird.

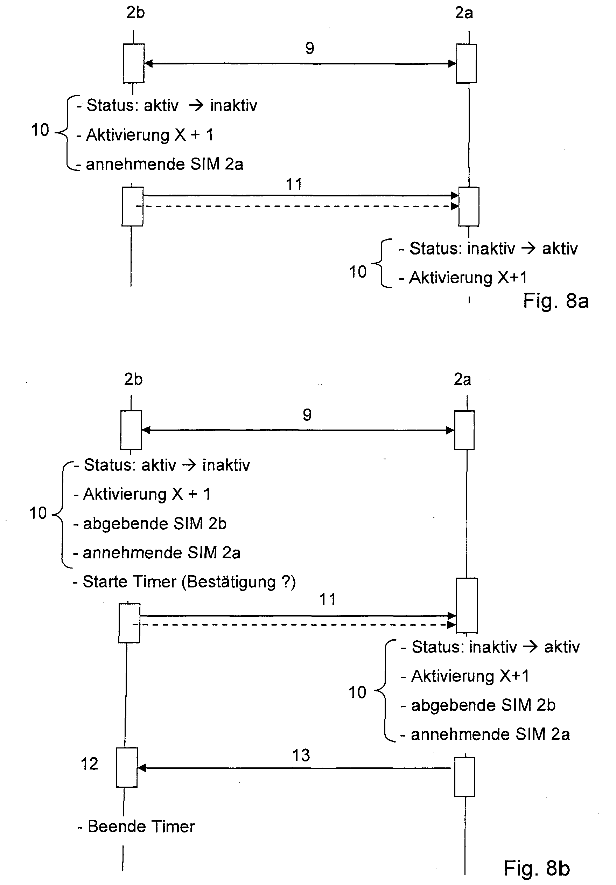

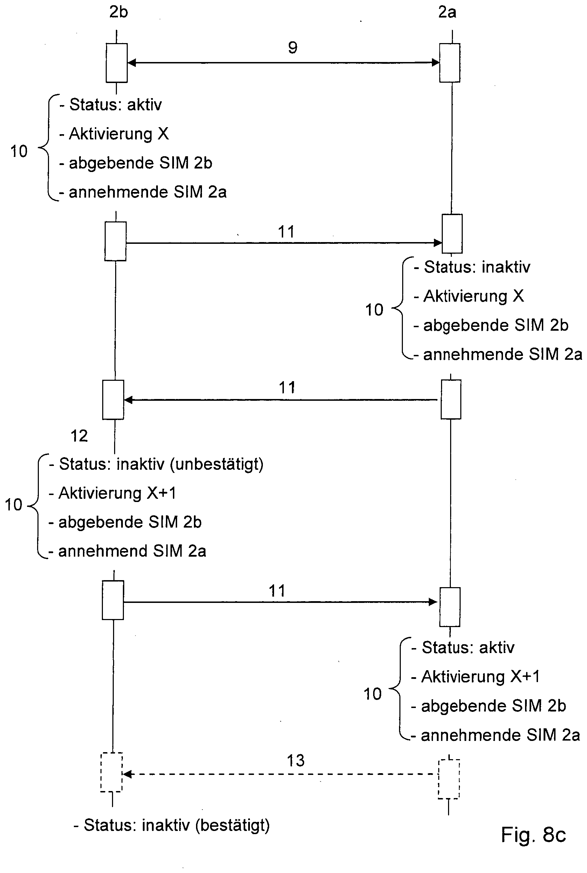

In Figur 8a, b, c sind beispielhafte Ablaufdiagramme für das erfindungsgemäße Verfahren beschrieben. Dabei wird in allen Beispielen zwischen dem ersten Teilnehmeridentitätsmodul 2a und dem zweiten Teilnehmeridentitätsmodul 2b ein sicherer Kanal gemäß Schritt 9 aufgebaut. An dem Verfahren können weitere Teilnehmeridentitätsmodule 2c teilnehmen, die Übertragung eines Rechts auf Nutzung der Dienste des Netzwerks 3 wird aber stets von einem Teilnehmeridentitätsmodul an ein anderes Teilnehmeridentitätsmodul weitergegeben. Dabei ist das zweite Teilnehmeridentitätsmodul 2b zur Nutzung von Diensten des Netzes 3 berechtigt, das erste Teilnehmeridentitätsmodul 2a soll durch das Aktivieren von Teilnehmeridentitätsdaten 4 dazu berechtigt werden.

Der Aufbau des sicheren Kanals ist Voraussetzung für eine manipulations- und abgriffsfreie Umgebung. Jedes am Verfahren beteiligte Teilnehmeridentitätsmodul 2 weist einen gemeinsamen symmetrischen Schlüssel auf. Insbesondere findet hierbei ein Message Authentication Code, kurz MAC, Anwendung. Alternativ können die beteiligten Teilnehmeridentitätsmodule 4 einen Sitzungsschlüssel aushandeln oder eine asymmetrische Verschlüsselung anwenden.

Wird als Kanal 9 der Versand von SMS angewendet, muss dieser Kanal nicht zusätzlich gesichert aufgebaut werden. Bei SMS werden mit MAC abgesicherte Datenpakete geschickt. Die Anzahl der Datenpakete variiert zwischen eins und vier.

Gemäß Figur 8a wird nach erfolgtem Aufbau 9 des sicheren Kanals der Schritt 10 ausgeführt, indem die Statusdaten 5 im zweiten Teilnehmeridentitätsmodul 2b von einem aktiven Status in einen inaktiven Status gewechselt werden. Ab diesem Zeitpunkt sind die Teilnehmeridentitätsdaten 4 des zweiten Teilnehmeridentitätsmoduls 2b deaktiviert, sodass das zweite Endgerät 1b zur Nutzung von Diensten des Netzes 3 nicht mehr berechtigt ist.

Eine zwischenzeitliche Authentisierungsanfrage des zweiten Teilnehmeridentitätsmoduls 2b wird endgeräteseitig unterbunden oder netzbetreiberseitig abgewiesen. Im Schritt 10 wird zusätzlich im Datenfeld 51 der Zählstand X inkrementiert. Im Schritt 10 werden weiterhin die Kennungsdaten 6 gemäß dem in Figur 7a dargestellten Datenfeld 62 aktualisiert, indem in das Datenfeld 62 die Kennung 60 des ersten Teilnehmeridentitätsmoduls 2a, also des annehmenden SIM 2a, eingetragen werden.

Im darauffolgenden Schritt 11 werden die Statusdaten 5 und die Kennungsdaten 6 gemäß des aktualisierten Datenfelds 62 vom zweiten Teilnehmeridentitätsmodul 2b an das erste Teilnehmeridentitätsmodul 2a übertragen. Nach dem Empfangen der Statusdaten 5 im ersten Teilnehmeridentitätsmodul 2a gemäß Schritt 11 werden die Statusdaten 5 des ersten Teilnehmeridentitätsmoduls 2a von einem inaktiven Status in einen aktiven Status gewechselt. Ab diesem Zeitpunkt sind die Teilnehmeridentitätsdaten 4 des ersten Teilnehmeridentitätsmoduls 2a aktiviert, sodass das erste Endgerät 1a zur Nutzung von Diensten des Netzes 3 berechtigt ist. Zusätzlich wird im Datenfeld 51 der Zählstand für die Anzahl der Aktivierungen inkrementiert. Sollte eine Einbuchung in das Netz 3 mittels des ersten Endgeräts 1 erfolglos bleiben, so wird das Übertragen der Statusdaten 5 sowie der Kennungsdaten 6 vom zweiten Teilnehmeridentitätsmodul wiederholt, was durch den gestrichelten Pfeil dargestellt ist.

In Figur 8b ist eine, zu Figur 8a alternative Ausgestaltung des erfindungsgemäßen Verfahrens dargestellt. Dabei wird - wie in Figur 8a unter Schritt 9 beschrieben - wiederum ein Kanal 9 zwischen dem ersten Teilnehmeridentitätsmodul 2a und dem zweiten Teilnehmeridentitätsmodul 2b aufgebaut. Ähnlich wie in Figur 8a werden die Statusdaten 5 im zweiten Teilnehmeridentitätsmodul 2b von einem aktiven Status in einen inaktiven Status gewechselt. Ab diesem Zeitpunkt sind die Teilnehmeridentitätsdaten 4 des zweiten Teilnehmeridentitätsmoduls 2b deaktiviert, sodass das zweite Endgerät 1b zur Nutzung von Diensten des Netzes 3 nicht mehr berechtigt ist. Eine zwischenzeitliche Authentisierungsanfrage des zweiten Teilnehmeridentitätsmoduls 2b wird endgeräteseitig unterbunden oder netzbetreiberseitig abgewiesen. Im Schritt 10 wird zusätzlich im Datenfeld 51 der Zählstand X inkrementiert. Im Schritt 10 werden die Kennungsdaten 6 gemäß dem in Figur 7b dargestellten Datenfeld 61 und 62 aktualisiert, indem in das Datenfeld 61 die Kennung 60 des zweiten Teilnehmeridentitätsmoduls 2b, also des abgebende SIM 2b, eingetragen werden und in das Datenfeld 62 die Kennungsdaten 6 des ersten Teilnehmeridentitätsmoduls 2a, also des annehmenden SIM 2a, eingetragen werden. Zusätzlich wird im Schritt 10 ein Timer gestartet, der eine vordefinierte Zeitspanne abwartet.

Im darauffolgenden Schritt 11 werden die Statusdaten 5 und die Kennungsdaten 6 gemäß des aktualisierten Datenfelds 62 vom zweiten Teilnehmeridentitätsmodul 2b an das erste Teilnehmeridentitätsmodul 2a übertragen. Nach dem Empfangen der Statusdaten 5 im ersten Teilnehmeridentitätsmodul 2a gemäß Schritt 11 werden die Statusdaten 5 des ersten Teilnehmeridentitätsmodul 2a von einem inaktiven Status in einen aktiven Status gewechselt. Ab diesem Zeitpunkt sind die Teilnehmeridentitätsdaten 4 des ersten Teilnehmeridentitätsmoduls 2a aktiviert, sodass das erste Endgerät 1a zur Nutzung von Diensten des Netzes 3 berechtigt ist. Zusätzlich wird im Datenfeld 51 der Zählstand für die Anzahl der Aktivierungen inkrementiert.

Das erste Teilnehmeridentitätsmodul 2a sendet anschließend die Statusdaten 5 sowie die Kennungsdaten 6 als Bestätigung an das zweite Teilnehmeridentitätsmodul 2b. Das zweite Teilnehmeridentitätsmodul 2b überwacht mittels des Timers, ob diese Bestätigung vom ersten Teilnehmeridentitätsmodul 2a erhalten wurde. Erfolgt die Bestätigung vom ersten Teilnehmeridentitätsmodul 2a nicht innerhalb der von durch den Timer eingestellten vordefinierten Zeitspanne so wird der Schritt 11 wiederholt, wie dies durch den gestrichelt gezeichneten Pfeil dargestellt ist. Die Wiederholung kann vollautomatisch erfolgen. Alternativ wird das Ausbleiben der Bestätigung vom ersten Teilnehmeridentitätsmodul 2a dem Benutzer an einer Anzeigevorrichtung des Endgeräts 1 angezeigt.

In Figur 8c ist eine zu den Figuren 8a und 8b alternative Ausgestaltung des erfindungsgemäßen Verfahrens dargestellt. Dabei wird - wie in Figur 8a unter Schritt 9 beschrieben - wiederum ein Kanal zwischen dem ersten Teilnehmeridentitätsmodul 2a und dem zweiten Teilnehmeridentitätsmodul 2b aufgebaut. Im Schritt 10 werden die Kennungsdaten 6 gemäß den in Figur 7b dargestellten Datenfeldern 61 und 62 aktualisiert, indem in das Datenfeld 61 die Kennungsdaten 6 des zweiten Teilnehmeridentitätsmoduls 2b, also der abgebenden SIM 2b, eingetragen werden und in das Datenfeld 62 die Kennungsdaten 6 des ersten Teilnehmeridentitätsmoduls 2a, also des annehmenden SIM 2a, eingetragen werden. Die Datenfelder 51 und 52 bleiben unverändert, da weder der Status noch die Anzahl der Statuswechsel zum jetzigen Zeitpunkt verändert werden. Im darauffolgenden Schritt 11 werden die Statusdaten 5 und die Kennungsdaten 6 gemäß der aktualisierten Datenfelder 61 und 62 vom zweiten Teilnehmeridentitätsmodul 2b an das erste Teilnehmeridentitätsmodul 2a übertragen.

In einer alternativen Ausgestaltung werden neben den Kennungsdaten 6 auch die Statusdaten 5 an das erste Teilnehmeridentitätsmodul 2a übertragen. Im ersten Teilnehmeridentitätsmodul 2a werden die Datenfelder 61 und 62 entsprechend der übertragenen Kennungsdaten 6 ebenfalls aktualisiert.

Die Aktualisierung wird dem zweiten Teilnehmeridentitätsmodul 2b bestätigt.

Im Schritt 12 vergleicht das zweite Teilnehmeridentitätsmodul 2b die erhaltenen Kennungsdaten 6 mit den in den Datenfeldern 61, 62 eingetragenen Kennungsdaten. Sind die Kennungsdaten identisch, wird das Verfahren an dieser Stelle nicht abgebrochen.

Bis zu diesem Zeitpunkt sind immer noch die Teilnehmeridentitätsdaten 4 des zweiten Teilnehmeridentitätsmoduls 2b aktiviert, sodass das zweite Endgerät 1b zur Nutzung von Diensten des Netzes 3 berechtigt ist. Dementsprechend sind die Teilnehmeridentitätsdaten 4 des ersten Teilnehmeridentitätsmoduls 2a deaktiviert, sodass das erste Endgerät 1a zur Nutzung von Diensten des Netzes 3 unberechtigt ist. Die Aktualisierung der Kennungsdaten 6 sowohl im ersten als auch im zweiten Teilnehmeridentitätsmodul 2a, 2b hat den Zweck, dass bei einer unerwarteten Störung, beispielsweise einem Batterieausfall, einer Störung de Kanals etc. jederzeit nachvollzogen werden kann, welches Teilnehmeridentitätsmodul 2 aktivierte Teilnehmeridentitätsdaten 4 aufwies und an wen das Recht zur Nutzung der Dienste des Netzes 3 übergeben werden sollte. Ebenso ist es möglich, dass das erste Teilnehmeridentitätsmodul 2a eine Aktivierung - aus welchen Gründen auch immer - vor dem Senden der Statusdaten 5 ablehnt.

Nach der Bestätigung der Aktualisierung der Kennungsdaten 6 im ersten Teilnehmeridentitätsmodul 2a werden die Statusdaten 5 des zweiten Teilnehmeridentitätsmoduls 2b von einem aktiven Status in einen Status inaktiv (unbestätigt) gewechselt, was im Datenfeld 52 protokolliert wird. Ab diesem Zeitpunkt sind die Teilnehmeridentitätsdaten 4 des zweiten Teilnehmeridentitätsmoduls 2b deaktiviert, sodass das zweite Endgerät 1b zur Nutzung von Diensten des Netzes 3 nicht mehr berechtigt ist. Eine zwischenzeitliche Authentisierungsanfrage des zweiten Teilnehmeridentitätsmoduls 2b wird endgeräteseitig unterbunden oder netzbetreiberseitig abgewiesen. Zusätzlich wird im Datenfeld 51 der Zählstand für die Anzahl der Aktivierungen inkrementiert.

Im darauffolgenden Schritt 11 werden die Statusdaten 5 vom zweiten Teilnehmeridentitätsmodul 2b an das erste Teilnehmeridentitätsmodul 2a übertragen. Auch die Kennungsdaten 6 können ggf. mit übertragen werden. Nach dem Empfangen der Statusdaten 5 im ersten Teilnehmeridentitätsmodul 2a werden die Statusdaten 5 des ersten Teilnehmeridentitätsmodul 2a von einem inaktiven Status in einen aktiven Status gewechselt. Ab diesem Zeitpunkt sind die Teilnehmeridentitätsdaten 4 des ersten Teilnehmeridentitätsmoduls 2a aktiviert, sodass das erste Endgerät 1a zur Nutzung von Diensten des Netzes 3 berechtigt ist. Zusätzlich wird im Datenfeld 51 der Zählstand für die Anzahl der Aktivierungen registriert. Im Schritt 13 erfolgt eine Bestätigung des erfolgreichen Statuswechsels an das zweite Teilnehmeridentitätsmodul 2b, wodurch dieses in den Status inaktiv (bestätigt) wechselt.

Der Zählstand dient dazu, sogenannte Replay-Attacken zu verhindern, wodurch das Verfahren weiter abgesichert ist.

Mit Hilfe dieses Verfahrens ist sichergestellt, dass eine Unterbrechung der Kommunikation zu irgendeinem Zeitpunkt jederzeit wieder aufgenommen werden kann. Das zweite, Teilnehmeridentitätsmodul 2b kann prinzipiell solange die Kennungsdaten 6 an das erste Teilnehmeridentitätsmodul 2a senden, bis es die Bestätigung in Form der Kennungsdaten 6 vom ersten Teilnehmeridentitätsmodul 2a gemäß Schritt 11 erhält.

Sollte während der Durchführung des Verfahrens der Kanal 9 dauerhaft unterbrochen werden, kann entweder der Betreiber des Netzes 3 die Statusdaten aller SIM-Klone 2 abfragen und in einen konsistenten Zustand zurücksetzen oder der in jedem Teilnehmeridentitätsmodul 2 befindliche Subskriptions-Management-Klient stellt anhand der Kennungsdaten 6 und der Statusdaten 5 einen konsistenten Zustand her.

Die Statusdaten, insbesondere mit dem Zählstand des im Datenfeld 51 befindlichen Aktivierungszählers können periodisch vom Netzwerk 3 abgefragt werden.

### Bezugszeichenliste

- 1: Endgerät
1a Erstes Endgerät
1b Zweites Endgerät
1c Drittes Endgerät
- 2: Teilnehmeridentitätsmodul, SIM
21 Datenschnittstelle
22 Zentrale Recheneinheit
23 flüchtige- und nichtflüchtige Speicherbereiche
2a Erstes Teilnehmeridentitätsmodul
2b Zweites Teilnehmeridentitätsmodul
2c Drittes Teilnehmeridentitätsmodul
- 3: Kommunikationsnetzwerk, Mobilfunknetz
- 4: Teilnehmeridentitätsdaten
4a,b,c,n Teilnehmeridentitätsdaten pro Kommunikationsnetz
- 5: Statusdaten
5a,b,c,n Statusdaten pro Kommunikationsnetz
51 Datenfeld für Statuswechselzähler
52 Datenfeld für Status inaktiv/aktiv
- 6: Kennungsdaten
61 Datenfeld für Kennung der abgebenden SIM
62 Datenfeld für Kennung der annehmenden SIM
- 7: Teilnehmeridentitätsprofile
- 8: SIM Applikationsstruktur
- 9: Aufbau (sicherer) Kanal
- 10: Aktualisierung Kennungsdaten, Statusdaten, Statuswechselzähler
- 11: Übertragen von Statusdaten /Kennungsdaten
- 12: Vergleichen der Kennungsdaten
- 13: Bestätigung des Statuswechsels
- 60: (eigene) Kennung

## Patentansprüche

1. Verfahren zum Aktivieren von Teilnehmeridentitätsdaten (4) in einem ersten Teilnehmeridentitätsmodul (2a) zum eindeutigen Identifizieren eines Teilnehmers in einem Kommunikationsnetzwerk (3) mit den Verfahrenschritten:
- Empfangen (11) von Statusdaten (5) bezüglich Teilnehmeridentitätsdaten (4) eines zweiten Teilnehmeridentitätsmodul (2b) im ersten Teilnehmeridentitätsmodul (2a) über einen Kommunikationskanal (9) zwischen dem ersten Teilnehmeridentitätsmodul (2a) und dem zweiten Teilnehmeridentitätsmodul (2b);
- Wechseln eines Status (52) in den Statusdaten (5) im ersten Teilnehmeridentitätsmodul (2a) von einem inaktiven Status in einen aktiven Status, wobei ab dem Zeitpunkt des Statuswechsels die Teilnehmeridentitätsdaten (4) im ersten Teilnehmeridentitätsmodul (2a) aktiviert sind, wodurch ein erstes Endgerät (1a) zur Nutzung von Diensten des Kommunikationsnetzwerks (3) unter Verwendung der aktivierten Teilnehmeridentitätsdaten (4) berechtigt wird,
**dadurch gekennzeichnet, dass** der Wechsel des Status (52) in den Statusdaten (5) des ersten Teilnehmeridentitätsmoduls (2a) als Bestätigung (14) an das zweite Teilnehmeridentitätsmodul (2b) gesendet wird.

2. Verfahren nach Anspruch 1, wobei die Teilnehmeridentitätsdaten (4) im ersten Teilnehmeridentitätsmodul (2a) und die Teilnehmeridentitätsdaten (4) im zweiten Teilnehmeridentitätsmodul (4b) identisch sind.

3. Verfahren nach einem der vorhergehenden Ansprüche, wobei vor dem Empfangen (11) der Statusdaten (5) des zweiten Teilnehmeridentitätsmoduls (2b) im ersten Teilnehmeridentitätsmodul (2a) ein zweites Endgerät (1b) zur Nutzung von Diensten des Kommunikationsnetzwerks (3) unter Verwendung von aktivierten Teilnehmeridentitätsdaten (4) im zweiten Teilnehmeridentitätsmodul (2b) berechtigt ist.

4. Verfahren nach einem der vorhergehenden Ansprüche, wobei vor dem Empfangen (11) der Statusdaten (5) des zweiten Teilnehmeridentitätsmoduls (2b) ein Status (52) der Statusdaten (5) des zweiten Teilnehmeridentitätsmoduls (2b) von einem aktiven Status in einen inaktiven Status wechselt, wobei ab dem Zeitpunkt des Statuswechsels im zweiten Teilnehmeridentitätsmodul (2b) die Teilnehmeridentitätsdaten (4) deaktiviert werden, wodurch ein zweites Endgerät (1b) zur Nutzung von Diensten des Kommunikationsnetzwerks (3) unberechtigt wird.

5. Verfahren nach einem der vorhergehenden Ansprüche, wobei vor dem Empfangen (11) der Statusdaten (5) des zweiten Teilnehmeridentitätsmoduls (2b) im zweiten Teilnehmeridentitätsmodul (2b) Kennungsdaten (6) des ersten Teilnehmeridentitätsmoduls (2a) beinhaltend eine Kennung des ersten Teilnehmeridentitätsmoduls (2a) eingebracht werden.

6. Verfahren nach Anspruch 5, wobei nach dem Einbringen der Kennungsdaten (6) im zweiten Teilnehmeridentitätsmodul (2b) der Status (52) in den Statusdaten (5) des zweiten Teilnehmeridentitätsmoduls (2b) von einem aktiven Status in einen inaktiven Status wechselt, wobei ab dem Zeitpunkt des Statuswechsels im zweiten Teilnehmeridentitätsmodul (2b) die Teilnehmeridentitätsdaten (4) deaktiviert werden, wodurch ein zweites Endgerät (1b), das mit dem zweiten Teilnehmeridentitätsmodul ausgestattet ist, zur Nutzung von Diensten des Kommunikationsnetzwerks (3) unberechtigt wird.

7. Verfahren nach einem der vorhergehenden Ansprüche, wobei die Statusdaten (5) einen Zählstand (51) beinhalten und der Zählstand (51) vor dem Senden (11) eines Status (52) durch das zweite Teilnehmeridentitätsmodul (2b) inkrementiert oder dekrementiert wird.

8. Verfahren nach einem der vorhergehenden Ansprüche, wobei der Kommunikationskanal kryptografisch gesichert wird.

9. System zur Durchführung eines Verfahrens gemäß den Ansprüchen 1 bis 8, wobei:
- das System mindestens zwei Teilnehmeridentitätsmodule (2a, 2b, 2c) aufweist, wobei jedes der im System befindlichen Teilnehmeridentitätsmodule (2a, 2b, 2c) identische Teilnehmeridentitätsdaten (4) aufweist; und
- jedes der im System befindlichen Teilnehmeridentitätsmodule (2a, 2b, 2c) eine eindeutige Kennung (60) aufweist, wobei jede Kennung (60) im System unterschiedlich ist, wodurch das jeweilige Teilnehmeridentitätsmodul (2a, 2b, 2c) im System eindeutig identifizierbar ist.

10. System nach Anspruch 9, wobei ein erfolgter Statuswechsel zum Aktivieren und/oder Deaktivieren von Teilnehmeridentitätsdaten (4) von dem betroffenen Teilnehmeridentitätsmodul (2a, 2b, 2c) an eine entfernte Instanz im Kommunikationsnetzwerk (3) berichtet wird.

## Claims

1. A method for activating subscriber identity data (4) in a first subscriber identity module (2a) for the unambiguous identifying of a subscriber in a communication network (3) having the method steps of:
- receiving (11) status data (5) with regard to subscriber identity data (4) of a second subscriber identity module (2b) in the first subscriber identity module (2a) via a communication channel (9) between the first subscriber identity module (2a) and the second subscriber identity module (2b);
- changing a status (52) in the status data (5) in the first subscriber identity module (2a) from an inactive status to an active status, wherein from the time point of the status change, the subscriber identity data (4) in the first subscriber identity module (2a) are activated, whereby a first end device (1a) is authorized for utilizing services of the communication network (3) while employing the activated subscriber identity data (4),
**characterized in that** the change of the status (52) in the status data (5) of the first subscriber identity module (2a) is sent as a confirmation (14) to the second subscriber identity module (2b).

2. The method according to claim 1, wherein the subscriber identity data (4) in the first subscriber identity module (2a) and the subscriber identity data (4) in the second subscriber identity module (2b) are identical.

3. The method according to any of the preceding claims, wherein before the receiving (11) of the status data (5) of the second subscriber identity module (2b) in the first subscriber identity module (2a) a second end device (1b) is authorized for utilizing services of the communication network (3) while employing activated subscriber identity data (4) in the second subscriber identity module (2b).

4. The method according to any of the preceding claims, wherein before the receiving (11) of the status data (5) of the second subscriber identity module (2b) a status (52) of the status data (5) of the second subscriber identity module (2b) changes from an active status to an inactive status, wherein from the time point of the status change in the second subscriber identity module (2b) the subscriber identity data (4) are deactivated, whereby a second end device (1b) becomes unauthorized for utilizing services of the communication network (3).

5. The method according to any of the preceding claims, wherein before the receiving (11) of the status data (5) of the second subscriber identity module (2b) in the second subscriber identity module (2b) identifier data (6) of the first subscriber identity module (2a) containing an identifier of the first subscriber identity module (2a) are incorporated.

6. The method according to claim 5, wherein after the incorporating of the identifier data (6) in the second subscriber identity module (2b) the status (52) in the status data (5) of the second subscriber identity module (2b) changes from an active status to an inactive status, wherein from the time point of the status change in the second subscriber identity module (2b), the subscriber identity data (4) are deactivated, whereby a second end device (1b) which is equipped with the second subscriber identity module becomes unauthorized for utilizing services of the communication network (3).

7. The method according to any of the preceding claims, wherein the status data (5) contain a count (51) and the count (51) is incremented or decremented before sending (11) a status (52) by the second subscriber identity module (2b).

8. The method according to any of the preceding claims, wherein the communication channel is cryptographically secured.

9. A system for carrying out a method according to the claims 1 to 8, wherein:
- the system has at least two subscriber identity modules (2a, 2b, 2c), wherein each of the subscriber identity modules (2a, 2b, 2c) located in the system has identical subscriber identity data (4); and
- each of the subscriber identity modules located in the system (2a, 2b, 2c) has an unambiguous identifier (60), wherein each identifier (60) in the system is different, whereby the respective subscriber identity module (2a, 2b, 2c) in the system is unambiguously identifiable.

10. The system according to claim 9, wherein an effected status change for activating and/or deactivating of subscriber identity data (4) is reported from the affected subscriber identity module (2a, 2b, 2c) to a remote entity in the communication network (3).

## Revendications

1. Procédé d'activation de données d'identité d'abonné (4) dans un premier module d'identité d'abonné (2a), aux fins de l'identification univoque d'un abonné dans un réseau de communication (3), comprenant les étapes de procédé :
- réception (11) de données d'état (5) concernant des données d'identité d'abonné (4) d'un deuxième module d'identité d'abonné (2b) dans le premier module d'identité d'abonné (2a) par l'intermédiaire d'un canal de communication (9) entre le premier module d'identité d'abonné (2a) et le deuxième module d'identité d'abonné (2b) ;
- passage d'un état (52) dans les données d'état (5) dans le premier module d'identité d'abonné (2a) d'un état inactif à un état actif, cependant que, à partir du moment du passage d'un état à l'autre, les données d'identité d'abonné (4) dans le premier module d'identité d'abonné (2a) sont activées, ce par quoi un premier terminal (1a) devient habilité à l'utilisation de services du réseau de communication (3) en utilisant les données d'identité d'abonné (4) activées,
**caractérisé en ce que** le passage d'un état à l'autre (52) dans les données d'état (5) du premier module d'identité d'abonné (2a) est envoyé en tant que confirmation (14) au deuxième module d'identité d'abonné (2b).

2. Procédé selon la revendication 1, cependant que les données d'identité d'abonné (4) dans le premier module d'identité d'abonné (2a) et les données d'identité d'abonné (4) dans le deuxième module d'identité d'abonné (2b) sont identiques.

3. Procédé selon une des revendications précédentes, cependant que, avant la réception (11) des données d'état (5) du deuxième module d'identité d'abonné (2b) dans le premier module d'identité d'abonné (2a), un deuxième terminal (1b) est habilité à l'utilisation de services du réseau de communication (3) en utilisant les données d'identité d'abonné (4) activées dans le deuxième module d'identité d'abonné (2b).

4. Procédé selon une des revendications précédentes, cependant que, avant la réception (11) des données d'état (5) du deuxième module d'identité d'abonné (2b), un état (52) des données d'état (5) du deuxième module d'identité d'abonné (2b) passe d'un état actif à un état inactif, cependant que, à partir du moment du passage d'un état à l'autre, dans le deuxième module d'identité d'abonné (2b), les données d'identité d'abonné (4) sont désactivées, ce par quoi un deuxième terminal (1b) devient non habilité à l'utilisation de services du réseau de communication (3).

5. Procédé selon une des revendications précédentes, cependant que, avant la réception (11) des données d'état (5) du deuxième module d'identité d'abonné (2b) dans le deuxième module d'identité d'abonné (2b), des données d'identifiant (6) du premier module d'identité d'abonné (2a) contenant un identifiant du premier module d'identité d'abonné (2a) sont introduites.

6. Procédé selon la revendication 5, cependant que, après l'introduction des données d'identifiant (6) dans le deuxième module d'identité d'abonné (2b), l'état (52) dans les données d'état (5) du deuxième module d'identité d'abonné (2b) passe d'un état actif à un état inactif, cependant que, à partir du moment du passage d'un état à l'autre, dans le deuxième module d'identité d'abonné (2b), les données d'identité d'abonné (4) sont désactivées, ce par quoi un deuxième terminal (1b) équipé du deuxième module d'identité d'abonné devient non habilité à l'utilisation de services du réseau de communication (3).

7. Procédé selon une des revendications précédentes, cependant que les données d'état (5) contiennent une valeur de compteur (51) et que la valeur de compteur (51) est, avant l'envoi (11) d'un état (52) par le deuxième module d'identité d'abonné (2b), incrémentée ou décrémentée.

8. Procédé selon une des revendications précédentes, cependant que le canal de communication est sécurisé cryptographiquement.

9. Système pour exécution d'un procédé selon les revendications de 1 à 8, cependant que
- le système comporte au moins deux modules d'identité d'abonné (2a, 2b, 2c), cependant que chacun des modules d'identité d'abonné (2a, 2b, 2c) se trouvant dans le système présente des données d'identité d'abonné (4) identiques ; et
- chacun des modules d'identité d'abonné (2a, 2b, 2c) se trouvant dans le système présente un identifiant (60) univoque, chaque identifiant (60) dans le système étant différent, ce par quoi le module d'identité d'abonné (2a, 2b, 2c) respectif dans le système est univoquement identifiable.

10. Système selon la revendication 9, cependant qu'un passage abouti d'un état à l'autre pour activer et/ou désactiver des données d'identité d'abonné (4) est rapporté par le module d'identité d'abonné (2a, 2b, 2c) concerné à une instance éloignée dans le réseau de communication (3).
